# EUROPEAN PATENT SPECIFICATION

(11) **EP 4 202 419 B1**
(45) Date of publication and mention of the grant of the patent: **18.09.2024**
(21) Application number: 21216408.1
(22) Date of filing: 21.12.2021
(51) Int. Cl.: G01N 21/71, G01J 3/443, G01J 3/02, G01J 3/04

(54) **LIGHT COLLECTION OPTICS FOR ELEMENTAL COMPOSITION ANALYSIS**
LICHTSAMMELOPTIK ZUR ANALYSE VON ELEMENTAREN ZUSAMMENSETZUNGEN
OPTIQUE DE COLLECTE DE LUMIÈRE POUR L'ANALYSE DE COMPOSITION ÉLÉMENTAIRE

(43) Date of publication of application: 28.06.2023
(73) Proprietor: Hitachi High-Tech Analytical Science Finland Oy, 02631 Espoo (FI)
(72) Inventor: RÄIKKÖNEN, Esa, 02140 ESPOO (FI)
(74) Representative: Berggren Oy

(56) References cited:
- MULTARI R A ET AL: "EFFECT OF SAMPLING GEOMETRY ON ELEMENTAL EMISSIONS IN LASER-INDUCEDBREAKDOWN SPECTROSCOPY", APPLIED SPECTROSCOPY, THE SOCIETY FOR APPLIED SPECTROSCOPY. BALTIMORE, US, vol. 50, no. 12, 1 December 1996 (1996-12-01), pages 1483 - 1499, XP000642401, ISSN: 0003-7028, DOI: 10.1366/0003702963904593

## Description

### TECHNICAL FIELD

The present invention relates to light collection optics for an apparatus that is applicable for analysis of elemental composition of a sample.

### BACKGROUND

There are various techniques available for carrying out an analysis of elemental composition of a sample under study, whereas a class of such techniques relies on an analysis of the elemental composition of the sample based on characteristics of an optical emission invoked from a sample under study. Prominent examples of such techniques include laser induced breakdown spectroscopy (LIBS) and optical emission spectroscopy (OES), which are widely applied both in mobile analyzer instruments that are useable in various environments and in desktop (or benchtop) analyzer instruments that are applicable e.g. in laboratory conditions.

Such an analyzer instrument is typically provided with an excitation source for invoking an optical emission from a sample under study, an optical arrangement for focusing the excitation on the sample and for transferring the invoked optical emission to a spectral detector, and an analyzer for determining the elemental composition of the sample based on the optical emission captured at the spectral detector.

In this regard, light collection optics provided as part of the optical arrangement aims at transferring the optical emission to the spectral detector in a manner that enables analysis of the elemental composition in a robust, reliable and accurate manner and any improvements in the light collection optics that serves these purposes contributes towards providing an analyzer instrument of improved performance.

In related art, Rosalie A. Multari et al., "Effect of Sampling Geometry on Elemental Emissions in Laser-Induced Breakdown Spectroscopy", Applied Spectroscopy, vol. 50, no 12, 1 December 1996, pp. 1483-1499, ISSN: 0003-7208 describes a study of sampling geometry in context of LIBS and draws a conclusion that by collecting light from the edges of a light-emitting plasma cloud formed on a sample surface one can record spectra using an ungated detector (no time resolution) that resemble closely the spectra obtained from a gated detector providing time-resolved detection. This result has implications in the development of less expensive LIBS detection systems.

### SUMMARY

It is therefore an object of the present invention to provide an approach for light collection that facilitates robust, reliable and accurate elemental composition analysis based on optical emission invoked from a sample under study.

In the following a simplified summary of some embodiments of the present invention is provided in order to facilitate a basic understanding of the invention. The summary is not, however, an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention. The invention is defined by the appended claims.

In accordance with an example embodiment, a light collection arrangement for an analyzer apparatus for elemental composition analysis is provided, the light collection arrangement provided for transferring optical emission from a target position to a detector interface of a detector assembly, the light collection arrangement comprising: an optical subsystem and an optical fiber assembly for transferring light between its first end and its second end, wherein the optical subsystem is arranged to transfer the optical emission from the target position to the first end of the optical fiber assembly and wherein the second end of the optical fiber assembly is coupled to the detector interface, and wherein the second end of the optical fiber assembly comprises a second opaque mask arranged to cover the fiber core on the second end of the optical fiber assembly apart from a transparent slit that allows for the optical emission to exit the fiber core.

In accordance with another example embodiment of the invention, an analyzer instrument for elemental composition analysis is provided, the analyzer instrument comprising an optical assembly according to the example embodiment described in the foregoing arranged in a space within a portion of a housing of the analyzer instrument; and the detector assembly arranged to receive the optical emission via the detector interface and generate one or more measurement signals that are descriptive of the received optical emission.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

The verbs "to comprise" and "to include" are used in this document as open limitations that neither exclude nor require the existence of also un-recited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF DRAWINGS

The embodiments of the invention are illustrated by way of example, and not by way of limitation, in the figures of the accompanying drawings, where
Figure 1 illustrates a block diagram of some logical elements of optical assembly according to an example together with some elements of an analyzer instrument according to an example;
Figure 2 schematically illustrates some aspects of an optical assembly according to an example together with a sample and with some elements of an analyzer instrument according to an example;
Figure 3 schematically illustrates some aspects of an optical fiber assembly 110 according to an example, which does not form part of the invention;
Figure 4 schematically illustrates some aspects of an optical fiber assembly 110 according to an example;
Figure 5 schematically illustrates some aspects of an optical fiber assembly 110 according to an example;
Figure 6 depicts a block diagram of some elements of an apparatus according to an example.

### DETAILED DESCRIPTION

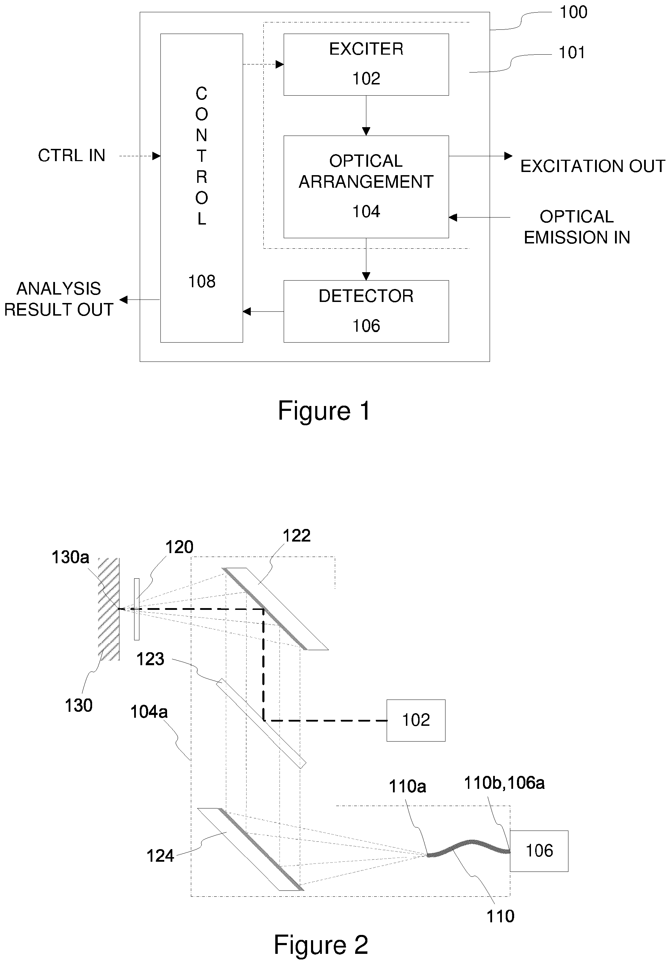

Figure 1 illustrates a block diagram of some logical elements of optical engine 101 according to an example together with some elements of an analyzer instrument 100 that is useable for analysis of elemental composition of a sample using optical emission spectroscopy via application of the optical engine 101, whereas Figure 2 schematically illustrates some aspects of the optical engine 101 according to an example together with some elements of the analyzer instrument 100 and with a sample 130. The optical engine 101 may be alternatively referred to as an optical assembly. Nevertheless, in the following examples this entity is predominantly referred to as the optical engine 101.

The optical engine 101 may comprise an exciter 102 for generating an excitation in order to invoke a plasma plume on a surface of the sample 130 and an optical arrangement 104 for transferring the excitation emitted from the exciter 102 to a target position 130a on the sample 130 and for transferring an optical emission from the plasma plume invoked on the surface of the sample 130 (from the target position 130a) to a detector assembly 106. The elements of the analyzer instrument 100 shown in Figure 1 and/or Figure 2 include the detector assembly 106 for generating one or more measurement signals that are descriptive of optical emission received therein and a controller 108 for controlling at least some aspects of operation of the exciter 102 and the detector assembly 106 and for carrying out analysis of elemental composition of the sample 130 based on the one or more measurement signals generated in the detector assembly 106.

The optical engine 101 may be applicable, for example, for optical analysis techniques such as LIBS and OES described in the foregoing and, consequently, the analyzer instrument 100 making use of the optical engine may be a LIBS analyzer or an OES analyzer, respectively. The analyzer instrument may be a mobile analyzer instrument or a stationary analyzer instrument: examples of the former include handheld analyzer instrument and (otherwise) portable analyzer instruments intended for outdoor or indoor use in field conditions, whereas examples of the latter include benchtop (or desktop) analyzer instruments intended primarily for indoor use in laboratory or factory conditions. The elements of the optical engine 101 may be arranged in a space within a housing of the analyzer instrument 100 such that the excitation from the exciter 102 is directed and/or focused at the target position 130a and that the detector assembly 106 is able to receive the emission originating from the sample 130. In this regard, the sample 130 and target position 130a are located outside the housing of the analyzer instrument, whereas the space containing the elements of the measurement assembly 100 is located within the housing in a location that can be conveniently brought into immediate vicinity of the sample 130 to bring a surface of the sample 130 at the target position 130a or, conversely, the space containing the elements of the measurement assembly 100 may be positioned in the housing such that the sample 130 can be conveniently brought into immediate vicinity thereof to bring the surface of the sample 130 at the target position 130a.

Each of the exciter 102, the detector assembly 106 and the controller 108 may be provided using respective techniques known in the art and hence they are not described in detail in the present disclosure. However, for completeness of the description, in the following a few non-limiting examples of providing each of the exciter 102, the detector assembly 106 and the controller 108 are described at a high level, whereas further details concerning their characteristics and operation are provided in context of examples that pertain to the optical arrangement 104 to extent such details are necessary for understanding advantageous characteristics of the optical arrangement 104.

The exciter 102 may be arranged to operate under control of the controller 108, e.g. based on an activation signal issued by the controller 108. The exciter 102 may comprise, for example, a light source that is arranged to generate excitation that comprises a light beam, a single light pulse or a series of two or more light pulses. Various characteristics of the excitation may be predefined ones and/or they may be defined in the activation signal. In an example, the exciter 102 may comprise a laser source arranged for emitting laser pulses. In such a scenario, the analyzer instrument 100 may be referred to as a laser-induced breakdown spectroscopy (LIBS) analyzer.

The detector assembly 106 may comprise a spectrometer for dispersing the optical emission into a set of wavelengths and a detector for generating, based on the dispersed optical emission received thereat, the one or more measurement signals that are descriptive of relative light intensities of the optical emission at different wavelengths, which may appear e.g. as one or more emission peaks at respective wavelengths. The optical emission may be input to the detector assembly 106 via a detector interface 106a, which may comprise, for example, an entrance slit of the spectrometer. The detector may comprise, for example, an image sensor provided as a charge-coupled device (CCD), as a complementary metal-oxide-semiconductor (CMOS) sensor or, in general, as any (silicon-based) solid state sensor, thereby substantially capturing one or more images that represent the dispersed optical emission originating from the plasma plume invoked on the surface of the sample 130. Figure 2 further depicts an optical fiber assembly 110 for transferring the optical emission to the detector assembly 106 via the detector interface 106a. Various characteristics of the optical fiber assembly 110 are described via non-limiting examples provided in the following.

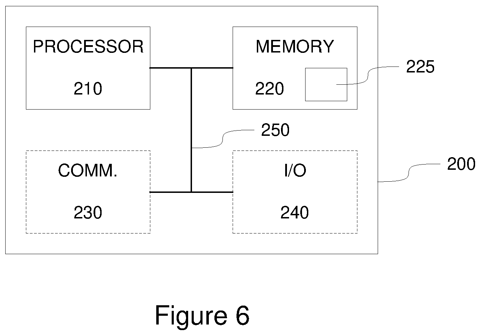

The controller 108 may be provided, for example, by an apparatus that comprises a processor and a memory, where the memory is arranged to store computer program code that, when executed by the processor, causes the apparatus to operate as the controller 108 according to the present disclosure. Such an apparatus may be referred to as a computing apparatus. A more detailed example of providing the controller 108 via usage of such a computing apparatus is provided in the following with references to Figure 6. As a particular example of its operation, the controller 108 may be arranged to carry out a measurement procedure in response to a trigger signal, where the trigger signal may be received, for example, in response to the user operating a user interface (Ul) of the analyzer instrument 100 accordingly. The controller 108 may further operate to display a measurement result obtained from the measurement procedure via the UI of the analyzer instrument 100, to store the measurement result in a memory provided in the analyzer instrument 100 and/or to transmit the measurement result to another device via usage of a communication apparatus available in the analyzer instrument 100, where the communication apparatus may enable wired and/or wireless communication between the analyzer instrument 100 and the other device.

The measurement procedure may be carried out in order to determine at least some aspects of elemental composition of the sample 130 under study and it may comprise the controller 108 operating the exciter 102 to generate the excitation in order to invoke the plasma plume on the surface of the sample 130 and, consequently, the optical emission from the sample 130, the controller 108 recording the one or more measurement signals generated by the detector assembly 106 based on the optical emission from the sample 130, and the controller 108 carrying out the analysis of elemental composition of the sample 130 based on the one or more measurement signals. The measurement result obtained from the measurement procedure may comprise information that defines one or more elements included in the sample 130 and the measurement result may further comprise information on the relative concentrations of the one or more elements in the sample 130. Such measurement procedures carried out via operation of the analyzer instrument 100 in the framework of techniques such as the LIBS and OES referred to above are well known in the art and they are not described in further detail in the present disclosure.

Along the lines described in the foregoing, Figure 2 schematically illustrates some elements of the optical engine 101 in further detail together with some further elements of the analyzer instrument 100 and with the sample 130. In particular, the illustration of Figure 2 schematically depicts a light collecting mirror 122, a beam splitting mirror 123, a focusing mirror 124 and the optical fiber assembly 110, which may be considered as respective components of a light collection arrangement 104a. The light collecting mirror 122, the beam splitting mirror 123, the focusing mirror 124 and a first end 110a of the optical fiber assembly 110 may be arranged in the space dedicated therefor within the housing of the analyzer instrument 100 (as described in the foregoing), whereas a second end 110b of the optical fiber assembly 110 may be coupled to the detector interface 106a. The first end 110a serves as an input face of the optical fiber assembly 110, whereas the second end 110b serves as an output face of the optical fiber assembly 110.

The exciter 102 may be positioned in said space within the housing of the analyzer instrument 100 such that it is able to emit the excitation therefrom towards the target position 130a that is outside said space and outside the analyzer instrument 100. In this regard, said space may include an opening through which the excitation is able to exit said space and the optical emission invoked from the sample 130 is able to enter said space. The opening in said space may be closed by a sample window 120, which is able to transmit the excitation originating from the exciter 102 and the optical emission invoked from the sample 130 while it may close the space containing the optical engine 101 in order to prevent moisture, dirt, dust etc. from exterior of the housing from entering the space.

The light collecting mirror 122 and the focusing mirror 124 may be positioned and oriented with respect to each other and with respect to the first end 110a of the optical fiber assembly 110 such that the optical emission invoked on the sample 130 is transferred from the target position 130a via the light collecting mirror 122 and the focusing mirror 124 to the first end 110a of the optical fiber assembly 110: the light collecting mirror 122 may comprise a collimating mirror arranged to reflect the optical emission originating from the target position 130a as a collimated light beam towards the focusing mirror 124, which may be arranged to reflect the collimated light beam received from the light collecting mirror 122 towards the first end 110a of the optical fiber assembly 110 such that light beam is substantially focused at the first end 110a of the optical fiber assembly 110, thereby providing a real image of the plasma plume at first end 110a.

The excitation may be transferred from the exciter 102 towards the target position 130a via the beam splitting mirror 123 and the light collecting mirror 122, where the beam splitting mirror 123 may be arranged between the light collecting mirror 122 and the focusing mirror 124 in an oblique angle (e.g. in a 45-degree angle) with respect the optical axis between the light collecting mirror 122 and the focusing mirror 124. In this regard the beam splitting mirror may be provided as a dichroic mirror that reflects wavelengths at an around the wavelength applied for the excitation (e.g. laser light at wavelength of 1064 nm) while it passes through wavelengths considered by the detector assembly 108 (e.g. a predefined spectral range between 180 nm and 600 nm). In an example, the optical arrangement 104 may further comprise a focusing lens that in combination with the light collecting mirror 122 serves to focus the excitation at the target position 130a, where the focusing lens may be arranged in a propagation path of the excitation between the exciter 102 and the beam splitting mirror 123. In a further example, the exciter 102 may be provided with an integrated focusing lens or a focusing assembly of other kind for focusing the excitation at the target position 130a may be applied.

The light collecting mirror 122, the beam splitting mirror 123 and the focusing mirror 124 serve as a non-limiting example of optical components that may serve as an optical subsystem that is applied for transferring the optical emission from the target position 130a to the first end 110a of the optical fiber assembly 110, whereas in other examples a different optical subsystem may be applied instead without departing from the scope of the present disclosure. As an example in this regard, such an optical subsystem may comprise one or more optical components, such as one or more mirrors and/or one or more lenses. Along similar lines, the arrangement of the exciter 102 with respect to components of the optical engine 101 and/or the manner of transferring the excitation therefrom towards the target point 130a serves as a non-limiting example and a different arrangement for transferring the excitation to the target position 130a may be applied without departing from the scope of the present disclosure. In particular, the transfer of excitation from the exciter to the target position 130a may be provided via an arrangement that does not involve the beam splitting mirror 123 arranged in the optical path between the light collecting mirror 122 and the focusing mirror 124.

Yet further, the example illustrated in Figure 2 is a schematic one that serves the purpose of conceptual illustration and hence the respective shapes, sizes and/or relative positions of the elements of the optical engine 101 shown in the illustration of Figure 2 may not reflect the shapes sizes and/or relative positions of the respective elements of a real-life implementation of the optical engine 101. In particular, the position of the first end 110a of the optical fiber assembly 110 with respect to the respective positions of the other components of the optical engine 101 and/or the light collection arrangement 104a may be different from that shown in the example of Figure 2 and it may be selected in view of respective positions and characteristics of other components of the optical engine 101 and/or the light collection arrangement 104a as well as in view of the design and requirements of the analyzer instrument 100 making use of the optical engine 101.

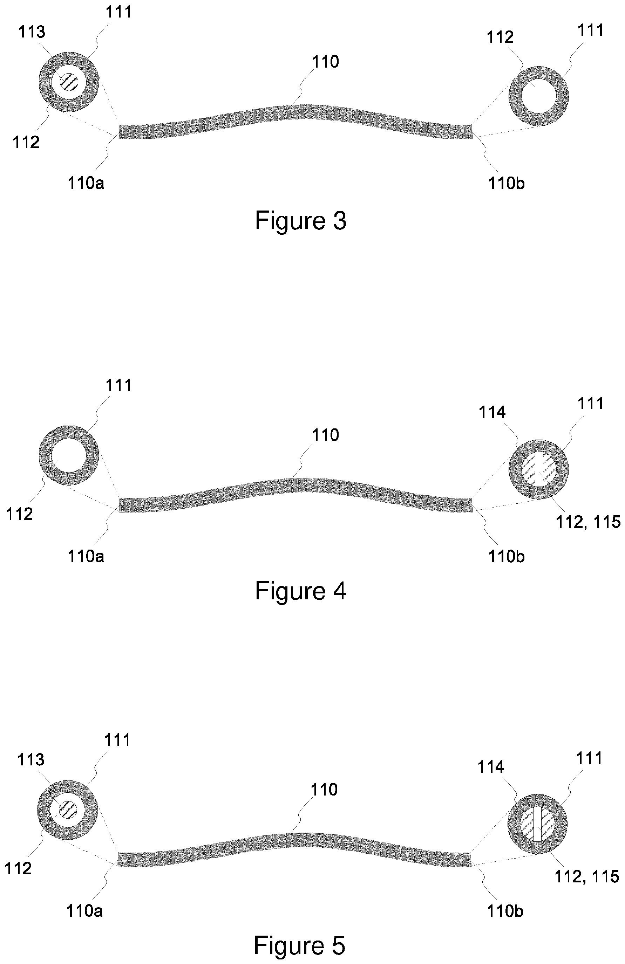

The optical fiber assembly 110 may comprise a cladding 111 and a fiber core 112 that runs between the first end 110a and the second end 110b of the optical fiber assembly 110 within the cladding 111, as schematically illustrated in Figures 3, 4 and 5. Herein, the term cladding 111 is to be construed broadly, encompassing all those layers of the optical fiber assembly 110 that surround the fiber core 112 but that do not serve to transfer light between the first end 110a and the second end 110b of the optical fiber assembly 110. In an example, the fiber core 112 may have a substantially circular cross-section having a diameter in a range from 50 to 1000 micrometers (µm).

Figure 3 schematically illustrates some aspects of the optical fiber assembly 110 according to an example outside the scope of the present invention. In this example, the first end 110a of the optical fiber assembly 110 may be provided with a first opaque mask 113 that covers a central portion of the fiber core 112, whereas in the second end 110b the fiber core 112 may be substantially fully exposed for coupling to the detector interface 106a. The first opaque mask 113 may serve to prevent a portion of the optical emission that originates from a central portion of the plasma plume from entering the fiber core 112 while it may allow a portion of the optical emission that originates from a peripheral portion of the plasma plume to enter the fiber core 112. In one example, the first opaque mask 113 may comprise a masking element attached on the surface of the first end 110a of the optical fiber assembly 110, whereas in another example the first opaque mask 113 may comprise a masking layer deposited on the surface of the first end 110a of the optical fiber assembly 110, where the masking layer may be provided e.g. as a thin film deposited metal such aluminum, chromium, gold, etc.

In a further example, the first opaque mask 113 may be provided via arranging a first covering portion that has an opaque central portion surrounded by a transparent portion to cover the first end 110a of the optical fiber assembly 110, the opaque portion thereby serving as the first opaque mask 113. The opaque center portion of the first covering portion may be provided, for example, via attaching a masking element or via depositing a masking layer on a transparent covering portion. In one example, the first covering portion may be attached on the first end 110a in a fixed manner, whereas in another example the first covering portion may be detachably attached on the first end 110a. In a non-limiting example, the first covering portion may be provided as a cap that may be mounted on the first end 110a of the optical fiber assembly 110 in fixed or detachable manner. In a yet further example, the first opaque mask 113 may be provided as an element of the light collection arrangement 104a that is separate from the optical fiber assembly 110 and disposed substantially to a focal point of the focusing mirror 124, thereby arranging the first opaque mask 113 against the first end 110a of the optical fiber assembly 110 when the optical fiber assembly 110 is mounted into its position to receive the focused light beam from the focusing mirror 124.

Along the lines described in the foregoing, the optical subsystem (e.g. the arrangement of the light collecting mirror 122 and the focusing mirror 124) may be arranged to focus the optical emission at the first end 110a of the optical fiber assembly 110 and, conversely, the first end 110a of the optical fiber assembly 110 may be arranged to receive the focused optical emission. Moreover, the optical emission may be transmitted via the fiber core 112 to the second end 110b of the optical fiber assembly 110, which may be coupled to the spectrometer of the detector assembly 106 via the detector interface 106a e.g. via the entrance slit of the spectrometer. The first opaque mask 113 may serve to block the portion of the optical emission that originates from a central portion of the plasma plume invoked by the excitation on the surface of the sample 130 from entering the fiber core 112 while allowing the portion of the optical emission that originates from peripheral portion(s) of the plasma plume to enter the fiber core 112, thereby transferring (only) the optical emission originating from the peripheral portion(s) of the plasma plume to the spectrometer in the detector assembly 106.

In this regard, the plasma plume is hottest in its center portion, whereas the temperature gradually decreases toward peripheral portions of the plasma plume. Typically, the optical emission from the hottest part(s) of the plasma plume in its central portion would result in capturing relatively broad emission peaks in the one or more measurement signals, which may result in compromised accuracy and/or reliability of the elemental component analysis carried out in the controller 108, whereas the optical emission from cooler parts of the plasma plume around its central portion enable capturing narrower emission peaks in the one or more measurement signals, which typically allows for improved accuracy and/or reliability of the elemental composition analysis. In this regard, the first opaque mask 113 arranged to cover the central portion of the fiber core 112 at the first end 110a of the optical fiber assembly 110 may serve to block a portion of the optical emission originating from the hottest part(s) of the plasma plume, thereby passing through only those portion(s) of the optical emission that enable capturing relatively narrow emission peaks in the one or more measurement signals in order to facilitate analysis of elemental composition of the sample 130 at improved accuracy and/or reliability.

In the example of Figure 3 the cross-section of the fiber core 112 and the first opaque mask 113 arranged thereon are depicted as respective substantially circular entities arranged for conveying a substantially circular image of the plasma plume invoked on the sample 130. This is, however, a non-limiting example and in other examples the cross-section of the fiber core 112 and/or the first opaque mask 113 may have a respective shape that is different from a substantially circular shape (e.g. elliptical) for example to account for a light collection arrangement where the image of the plasma plume received at the first end 110a of the optical fiber assembly 110 is non-circular e.g. due to capturing the optical emission at a non-right angle with respect to the surface of the sample 130.

The size of the first opaque mask 113 may depend on factors such as characteristics of the exciter 102 (in terms of the expected size of the plasma plume it serves to invoke on the surface of the sample 130), characteristics of the optical components applied for transferring the image of the plasma plume from the target position 130a to the first end 110a of the optical fiber assembly 110 (e.g. in terms of magnification of the image) and/or on the size (e.g. the diameter) of the image of the plasma plume on the fiber core 112 at the first end 110a of the optical fiber assembly 110. As a non-limiting example, the first opaque mask 113 may be applied to cover approximately 30 to 70 %, e.g. 50 %, of the cross-sectional area of the fiber core 112 to ensure sufficient portion of the optical emission entering the fiber core 112 while ensuring that the portion of the optical emission originating from the hottest part(s) at the center portion of the plasma plume is prevented from entering the fiber core 112. However, along the lines described above, the most expedient size of the first opaque mask 113 depends on the size of the image of the plasma plume projected on the first end 110a of the optical fiber assembly 110 in relation to the desired extent of the emission-peak-narrowing effect arising from blocking the optical emission from the hottest part(s) of the plasma plume in its central portion.

Figure 4 schematically illustrates some aspects of the optical fiber assembly 110 according to another example. In this example, the fiber core 112 in the first end 110a of the optical fiber assembly 110 may be substantially fully exposed for reception of the optical emission via the optical subsystem (e.g. via the arrangement of the light collecting mirror 122 and the focusing mirror 124), whereas the second end 110b of the optical fiber assembly 110 may be provided with a second opaque mask 114 arranged to cover the fiber core 112 on the second end 110b apart from a slit 115 that is transparent and hence allows for the optical emission to exit the fiber core 112. As a non-limiting example, the width of the slit 115 may be in a range from 5 to 50 micrometers, e.g. 20 micrometers. The slit 115 may extend substantially from an edge of the fiber core 112 to an opposite edge of the fiber core 112 and it may have a substantially uniform width, whereas the slit 115 may have an overall shape of a substantially straight 'line' (as in the illustration of Figure 4) or it may have a curved overall shape. Hence, at least conceptually, the slit 115 may be provided as an opening in the second opaque mask 114 that otherwise covers the fiber core 112 at the second end 110b of the optical fiber assembly 100 or as an opening between two mask portions that jointly serve as the second opaque mask 114.

The second opaque mask 114 may be provided using any of the techniques described in the foregoing for providing the first opaque mask 113: in one example, the second opaque mask 114 may comprise a masking element attached on the surface of the second end 110b of the optical fiber assembly 110, whereas in another example, the second opaque mask 114 may comprise a masking layer deposited on the surface of the second end 110b of the optical fiber assembly 110 (e.g. as described in the foregoing for the masking layer deposited on the first 110a, *mutatis mutandis*). In a further example, the second opaque mask 114 may be provided via arranging a second covering portion that is opaque apart from a transparent opening of a type described above to provide the slit 115, the second covering portion thereby serving as the second opaque mask 114. The opaque portion of the second covering portion may be provided, for example, via attaching one or more masking elements or via depositing one or more masking layer portions on a transparent second covering portion. In one example, the second covering portion may be attached on the second end 110b in a fixed manner, whereas in another example the second covering portion may be detachably attached on the second end 110b. In a non-limiting example, the second covering portion may be provided as a cap that may be mounted on the second end 110b of the optical fiber assembly 110 in fixed or detachable manner.

When using the optical fiber assembly 110 according to the example of Figure 4 having the slit provided at the second end 110b of the optical fiber assembly 110, the detector interface 106a may be provided without the entrance slit that is already provided at the second end 110b of the optical fiber assembly 110. While this simplifies the structure of the detector assembly 106 and/or the detector interface 106a via requiring only an interface for receiving (an optical fiber receptacle provided for coupling) the second end 110b of the optical fiber assembly 110 instead of having the entrance slit prepared therein (e.g. via application of laser cutting or a corresponding technique), it imposes an additional requirement for the optical fiber assembly 110 via preparation of the second opaque mask 114 described above to provide the slit 115. However, techniques available for preparing the second opaque mask 114 and the slit 115 on the second end 110b of the optical fiber assembly 110 (in comparison to those available for preparing the entrance slit into the detector assembly 106) enable more accurate design of the slit 115 in terms of its width and its position with respect to the fiber core 112, thereby enabling reduced engineering tolerance in preparation of the slit 115. In such a design, coupling of the second end 110b of the optical fiber assembly 110 to the detector assembly 106 via the detector interface 106a (e.g. via usage of the optical fiber connector provided for coupling the second end 110b to the detector interface 106a) may be provided with a mechanism that prevents rotary motion of the fiber core 112 with respect to the detector interface 106a and/or to detector assembly 106 to ensure keeping the slit 115 in alignment with the spectrometer in the detector assembly 106.

Figure 5 schematically illustrates some aspects of the optical fiber assembly 110 according to a further example. In this example, the first end 110a of the optical fiber assembly 110 may be provided with the first opaque mask 113 that covers a central portion of the fiber core 112 (as in the example of Figure 3), whereas the second end 110b of the optical fiber assembly 110 may be provided with the second opaque mask 114 arranged to cover the fiber core 112 on the second end 110b apart from the transparent slit 115 (as in the example of Figure 4). Hence, the optical fiber assembly 110 according to this example provides the respective advantages of the examples described in the foregoing with references to Figures 3 and 4.

Still referring to the example of Figure 5, the respective back sides of the first opaque mask 113 and the second opaque mask 114, i.e. their respective sides that are facing the fiber core 112, may comprise or may be provided as respective reflecting surfaces. Consequently, while a portion of the optical emission arriving via the fiber core 112 at the second end 110b of the optical fiber assembly 110 may exit the fiber core 112 through the slit 115, another portion of the optical emission may be reflected back towards the first end 110a of the optical fiber assembly 110 by the reflecting back side of the second opaque mask 114. Moreover, a portion of the optical emission arriving via the fiber core 112 at the first end 110a of the optical fiber assembly 110 may exit the fiber core 112 through portion(s) that are not covered by the first opaque mask 113, whereas another portion of the optical emission may be reflected back towards the second end 110b of the optical fiber assembly 110 by the reflecting back side of the first opaque mask 113. Consequently, due to the respective reflecting back sides of the first and second opaque masks 113, 114 part of the optical emission originating from the target position 130a may be transferred via the optical fiber assembly 110 to the detector interface 106a after one or more round-trips between the second and first ends 110b, 110a of the optical fiber assembly 110, thereby enabling improved transmission of the optical emission from the target position 130a to the detector input 106a.

In a yet further example, the optical fiber assembly 110 may be similar to that described in context of examples that refer to Figure 4 with the back side of the first opaque mask 113 comprising or otherwise being provided as a reflecting surface. Moreover, the detector interface 106a may comprise the entrance slit described in the foregoing that has its surrounding area provided as a reflecting surface. Consequently, when the second end 110b of the optical fiber assembly 110 is coupled to the detector interface 106a (with a substantially negligible gap between the second end 110b and the entrance slit of the detector interface 106a), the reflecting surface around the entrance slit serves the same purpose as the reflecting back surface of the second opaque mask 114 in the example of Figure 5, thereby enabling improved transmission of the optical emission from the target position 130a to the detector input 106a.

Referring back to the example of Figure 2, the controller 108 may be provided by a respective hardware means, by a respective software means or by a respective combination of a hardware means and a software means. As an example in this regard, Figure 6 schematically depicts some components of an apparatus 200 that may be employed to implement the controller 108. The apparatus 200 comprises a processor 210 and a memory 220. The memory 220 may store data and computer program code 225. The apparatus 200 may further comprise communication means 230 for wired or wireless communication with other apparatuses and/or user I/O (input/output) components 240 that may be arranged, together with the processor 210 and a portion of the computer program code 225, to provide the UI of the analyzer instrument for receiving input from a user and/or for providing output to the user. In particular, the user I/O components may include user input means, such as one or more keys or buttons, a keyboard, a touchscreen or a touchpad, etc. The user I/O components may include output means, such as a display or a touchscreen. The components of the apparatus 200 are communicatively coupled to each other via a bus 250 that enables transfer of data and control information between the components.

The memory 220 and a portion of the computer program code 225 stored therein may be further arranged, with the processor 210, to provide the controller 108. The processor 210 is configured to read from and write to the memory 220. Although the processor 210 is depicted as a respective single component, it may be implemented as respective one or more separate processing components. Similarly, although the memory 220 is depicted as a respective single component, it may be implemented as respective one or more separate components, some or all of which may be integrated/removable and/or may provide permanent / semi-permanent/ dynamic/cached storage.

The computer program code 225 may comprise computer-executable instructions that implement at least some functions of the controller 108 when loaded into the processor 210. As an example, the computer program code 225 may include a computer program consisting of one or more sequences of one or more instructions. The processor 210 is able to load and execute the computer program by reading the one or more sequences of one or more instructions included therein from the memory 220. The one or more sequences of one or more instructions may be configured to, when executed by the processor 210, cause the apparatus 200 to operate as the controller 108 e.g. according to operations, procedures and/or functions described in the foregoing. Hence, the apparatus 200 may comprise at least one processor 210 and at least one memory 220 including the computer program code 225 for one or more programs, the at least one memory 220 and the computer program code 225 configured to, with the at least one processor 210, cause the apparatus 200 to operate as the controller 108 e.g. in accordance with operations, procedures and/or functions described in the foregoing.

The computer program code 225 may be provided e.g. as a computer program product comprising at least one computer-readable non-transitory medium having the computer program code 225 stored thereon, which computer program code 225, when executed by the processor 210 causes the apparatus 200 to operate as the analyzer controller 108 e.g. according to operations, procedures and/or functions described in the foregoing. The computer-readable non-transitory medium may comprise a memory device or a record medium that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described. The invention is only limited by the appended claims.

## Claims

1. A light collection arrangement (104a) for an analyzer apparatus (100) for analysis of elemental composition of a sample (130) using optical emission spectroscopy, the light collection arrangement (104a) provided for transferring optical emission from a target position (130a) to a detector interface (106a) of a detector assembly (106), the light collection arrangement (104a) comprising:
an optical subsystem and an optical fiber assembly (110) for transferring light between its first end (110a) and its second end (110b),
wherein the optical subsystem is arranged to transfer the optical emission from the target position (130a) to the first end (110a) of the optical fiber assembly (110) and wherein the second end (110b) of the optical fiber assembly (110) is coupled to the detector interface (106a),
**characterized in that** the second end (110b) of the optical fiber assembly (100) comprises a second opaque mask (114) arranged to cover the fiber core (112) on the second end (110b) of the optical fiber assembly (110) apart from a transparent slit (115) that allows for the optical emission to exit the fiber core (112).

2. A light collection arrangement (104a) according to claim 1, wherein the light collection arrangement (104a) comprises a first opaque mask (113) arranged to cover a central portion of a fiber core (112) on the first end (110a) of the optical fiber assembly (110), thereby preventing a central portion of the optical emission from entering the fiber core (112) while allowing a peripheral portion of the optical emission to enter the fiber core (112).

3. A light collection arrangement (104a) according to claim 1 or 2, wherein the optical subsystem comprises one or more optical components disposed with respect to each other, with respect to the target position (130a) and with respect to the first end (110a) of the optical fiber assembly (110) such that the optical emission is transferred from the target position (130a) to the first end (110a) of the optical fiber assembly (110).

4. A light collection arrangement (104a) according to any of claims 1 to 3, wherein the first opaque mask (113) is arranged to cover a predefined portion of the fiber core (112) on the first end (110a) of the optical fiber assembly (100).

5. A light collection arrangement (104a) according to claim 4, wherein the first opaque mask (113) is arranged on the first end (110a) of the optical fiber assembly (110).

6. A light collection arrangement (104a) according to claim 5, wherein the first opaque mask (113) comprises one of the following:
a masking element attached on the surface of the first end (110a) of the optical fiber assembly (110),
a masking layer deposited on the surface of the first end (110a) of the optical fiber assembly (110).

7. A light collection arrangement (104a) according to claim 5, wherein the optical fiber assembly (110) comprises a first covering portion arranged to cover its first end (110a), wherein the first covering portion comprises an opaque central portion surrounded by a transparent portion, the opaque central portion of the covering portion thereby serving as the first opaque mask (113).

8. A light collection arrangement according to any of claims 1 to 7, wherein the slit (115) comprises an opening in the second opaque mask (114), wherein the opening has a substantially uniform width and it substantially extends in a lateral direction from an edge of the fiber core (112) to an opposite edge of the fiber core (112).

9. A light collection arrangement (104a) according to any of claims 1 to 8, wherein the second opaque mask (114) comprises one of the following:
a masking element attached on the surface of the second end (110b) of the optical fiber assembly (110),
a masking layer deposited on the surface of the second end (110b) of the optical fiber assembly (110).

10. A light collection arrangement (104a) according to any of claims 1 to 8, wherein the optical fiber assembly (110) comprises a second covering portion arranged to cover its second end (110b), wherein the second covering portion is arranged to cover the fiber core (112) apart from said slit (115).

11. A light collection arrangement (104a) according to any of claims 2 to 10, wherein
respective back sides of the first opaque mask (113) and the second opaque mask (114) that are facing the fiber core (112) comprise respective reflecting surfaces.

12. An analyzer instrument (100) for analysis of elemental composition of a sample (130) using optical emission spectroscopy, the analyzer instrument (100) comprising:
a light collection arrangement (104a) according to any of claims 1 to 11 arranged in a space within a portion a housing of the analyzer instrument (100); and
the detector assembly (106) arranged to receive the optical emission via the detector interface (106a) and generate one or more measurement signals that are descriptive of the received optical emission.

13. An analyzer instrument according to claim 12, further comprising, arranged in said space, an exciter (102) for generating an excitation directed at the target position (130a) to invoke the optical emission from the sample (130) positioned at the target position (130a).

14. An analyzer instrument (100) according to claim 13, wherein the light collection arrangement (104a) and the exciter (102) are arranged in said space such that
the target position (130a) is set substantially at a surface of the sample (130) when said portion of the housing is positioned against the sample (130), and
said space is provided with an opening that enables the excitation to exit the space towards the target position (130a) and enables the optical emission from the target position (130a) to enter the space.

## Patentansprüche

1. Lichtsammelanordnung (104a) für eine Analysevorrichtung (100) zum Analysieren der elementaren Zusammensetzung einer Probe (130) mit Hilfe optischer Emissionsspektroskopie, wobei die Lichtsammelanordnung (104a) für eine Übertragung optischer Emissionen von einer Zielposition (130a) zu einer Detektorschnittstelle (106a) einer Detektoranordnung (106) bereitgestellt ist,
wobei die Lichtsammelanordnung (104a) Folgendes umfasst:
ein optisches Teilsystem und eine Glasfaseranordnung (110) zum Übertragen von Licht zwischen ihrem ersten Ende (110a) und ihrem zweiten Ende (110b),
wobei das optische Teilsystem dafür angeordnet ist, die optische Emission vom der Zielposition (130a) zu dem ersten Ende (110a) der Glasfaseranordnung (110) zu übertragen, und wobei das zweite Ende (110b) der Glasfaseranordnung (110) mit der Detektorschnittstelle (106a) gekoppelt ist,
**dadurch gekennzeichnet, dass** das zweite Ende (110b) der Glasfaseranordnung (100) eine zweite lichtundurchlässige Maske (114) umfasst, die dafür angeordnet ist, den Faserkern (112) an dem zweiten Ende (110b) der Glasfaseranordnung (110) abzudecken, mit Ausnahme eines transparenten Schlitzes (115), der das Austreten der optischen Emission aus dem Faserkern (112) gestattet.

2. Lichtsammelanordnung (104a) nach Anspruch 1, wobei die Lichtsammelanordnung (104a) eine erste lichtundurchlässige Maske (113) umfasst, die dafür angeordnet ist, einen mittigen Abschnitt eines Faserkerns (112) an dem ersten Ende (110a) der Glasfaseranordnung (110) abzudecken, wodurch verhindert wird, das ein mittiger Abschnitt der optischen Emission in den Faserkern (112) eintritt, während es einem Umfangsabschnitt der optischen Emission gestattet wird, in den Faserkern (112) einzutreten.

3. Lichtsammelanordnung (104a) nach Anspruch 1 oder 2, wobei das optische Teilsystem eine oder mehrere optische Komponenten umfasst, die in Bezug aufeinander, in Bezug auf die Zielposition (130a) und in Bezug auf das erste Ende (110a) der Glasfaseranordnung (110) derart angeordnet sind, dass die optische Emission von der Zielposition (130a) zu dem ersten Ende (110a) der Glasfaseranordnung (110) übertragen wird.

4. Lichtsammelanordnung (104a) nach einem der Ansprüche 1 bis 3, wobei die erste lichtundurchlässige Maske (113) dafür angeordnet ist, einen vordefinierten Abschnitt des Faserkerns (112) an dem ersten Ende (110a) der Glasfaseranordnung (100) abzudecken.

5. Lichtsammelanordnung (104a) nach Anspruch 4, wobei die erste lichtundurchlässige Maske (113) an dem ersten Ende (110a) der Glasfaseranordnung (110) angeordnet ist.

6. Lichtsammelanordnung (104a) nach Anspruch 5, wobei die erste lichtundurchlässige Maske (113) eines des Folgenden umfasst:
ein Maskierungselement, das an der Oberfläche des ersten Endes (110a) der Glasfaseranordnung (110) angebracht ist,
eine Maskierungsschicht, die auf die Oberfläche des ersten Endes (110a) der Glasfaseranordnung (110) abgeschieden ist.

7. Lichtsammelanordnung (104a) nach Anspruch 5, wobei die Glasfaseranordnung (110) einen ersten abdeckenden Abschnitt umfasst, der dafür angeordnet ist, ihr erstes Ende (110a) abzudecken, wobei der erste abdeckende Abschnitt einen lichtundurchlässigen mittigen Abschnitt umfasst, der von einem transparenten Abschnitt umgeben ist, wobei der lichtundurchlässige mittige Abschnitt des abdeckenden Abschnitts dadurch als die erste lichtundurchlässige Maske (113) dient.

8. Lichtsammelanordnung nach einem der Ansprüche 1 bis 7, wobei der Schlitz (115) eine Öffnung in der zweiten lichtundurchlässigen Maske (114) umfasst, wobei die Öffnung eine im Wesentlichen gleichförmige Breite aufweist und sich im Wesentlichen in einer seitlichen Richtung von einem Rand des Faserkerns (112) zu einem gegenüberliegenden Rand des Faserkerns (112) erstreckt.

9. Lichtsammelanordnung (104a) nach einem der Ansprüche 1 bis 8, wobei die zweite lichtundurchlässige Maske (114) eines des Folgenden umfasst:
ein Maskierungselement, das an der Oberfläche des zweiten Endes (110b) der Glasfaseranordnung (110) angebracht ist,
eine Maskierungsschicht, die auf die Oberfläche des zweiten Endes (110b) der Glasfaseranordnung (110) abgeschieden ist.

10. Lichtsammelanordnung (104a) nach einem der Ansprüche 1 bis 8, wobei die Glasfaseranordnung (110) einen zweiten abdeckenden Abschnitt umfasst, der dafür angeordnet ist, ihr zweites Ende (110b) abzudecken, wobei der zweite abdeckende Abschnitt dafür angeordnet ist, den Faserkern (112) mit Ausnahme des Schlitzes (115) abzudecken.

11. Lichtsammelanordnung (104a) nach einem der Ansprüche 2 bis 10, wobei
jeweilige Rückseiten der ersten lichtundurchlässigen Maske (113) und der zweiten lichtundurchlässigen Maske (114), die zum Faserkern (112) weisen, jeweilige reflektierende Oberflächen umfassen.

12. Analyseinstrument (100) zur Analyse der elementaren Zusammensetzung einer Probe (130) mit Hilfe optischer Emissionsspektroskopie, wobei das Analyseinstrument (100) Folgendes umfasst:
eine Lichtsammelanordnung (104a) nach einem der Ansprüche 1 bis 11, die in einem Raum in einem Abschnitt eines Gehäuses des Analyseinstruments (100) angeordnet ist, und
die Detektoranordnung (106), die dafür angeordnet ist, die optische Emission über die Detektorschnittstelle (106a) zu empfangen und ein oder mehrere Messsignale zu erzeugen, welche die empfangene optische Emission beschreiben.

13. Analyseinstrument nach Anspruch 12, ferner einen Erreger (102) umfassend, der in dem Raum angeordnet ist, zum Erzeugen einer Erregung, die auf die Zielposition (130a) gerichtet ist, um die optische Emission von der Probe (130) zu aktivieren, die an der Zielposition (130a) positioniert ist.

14. Analyseinstrument (100) nach Anspruch 13, wobei die Lichtsammelanordnung (104a) und der Erreger (102) derart in dem Raum angeordnet sind, dass
die Zielposition (130a) im Wesentlichen auf einer Oberfläche der Probe (130) festgelegt ist, wenn der Abschnitt des Gehäuses an der Probe (130) anliegend positioniert ist, und
der Raum mit einer Öffnung versehen ist, die es der Erregung gestattet, den Raum zu der Zielposition (130a) hin zu verlassen, und die es der optischen Emission gestattet, von der Zielposition (130a) in den Raum einzutreten.

## Revendications

1. Agencement de collecte de lumière (104a) pour un appareil d'analyse (100) pour l'analyse de la composition élémentaire d'un échantillon (130) par spectroscopie d'émission optique, l'agencement de collecte de lumière (104a) étant prévu pour transférer une émission optique depuis une position cible (130a) à une interface de détecteur (106a) d'un ensemble détecteur (106), l'agencement de collecte de lumière (104a) comprenant :
un sous-système optique et un ensemble fibre optique (110) pour transférer la lumière entre sa première extrémité (110a) et sa deuxième extrémité (110b),
dans lequel le sous-système optique est agencé pour transférer l'émission optique depuis la position cible (130a) à la première extrémité (110a) de l'ensemble fibre optique (110) et dans lequel la deuxième extrémité (110b) de l'ensemble fibre optique (110) est couplée à l'interface de détecteur (106a),
**caractérisé en ce que** la deuxième extrémité (110b) de l'ensemble fibre optique (100) comprend un deuxième masque opaque (114) agencé pour recouvrir l'âme de fibre (112) sur la deuxième extrémité (110b) de l'ensemble fibre optique (110) hormis une fente transparente (115) qui permet à l'émission optique de sortir de l'âme de fibre (112).

2. Agencement de collecte de lumière (104a) selon la revendication 1, l'agencement de collecte de lumière (104a) comprenant un premier masque opaque (113) agencé pour recouvrir une partie centrale d'une âme de fibre (112) sur la première extrémité (110a) de l'ensemble fibre optique (110), empêchant ainsi une partie centrale de l'émission optique d'entrer dans l'âme de fibre (112) tout en laissant une partie périphérique de l'émission optique entrer dans l'âme de fibre (112).

3. Agencement de collecte de lumière (104a) selon la revendication 1 ou 2, dans lequel le sous-système optique comprend un ou plusieurs composants optiques disposés les uns par rapport aux autres, par rapport à la position cible (130a) et par rapport à la première extrémité (110a) de l'ensemble fibre optique (110) de telle sorte que l'émission optique est transférée depuis la position cible (130a) à la première extrémité (110a) de l'ensemble fibre optique (110).

4. Agencement de collecte de lumière (104a) selon l'une quelconque des revendications 1 à 3, dans lequel le premier masque opaque (113) est agencé pour recouvrir une partie prédéfinie de l'âme de fibre (112) sur la première extrémité (110a) de l'ensemble fibre optique (100).

5. Agencement de collecte de lumière (104a) selon la revendication 4, dans lequel le premier masque opaque (113) est disposé sur la première extrémité (110a) de l'ensemble fibre optique (110).

6. Agencement de collecte de lumière (104a) selon la revendication 5, dans lequel le premier masque opaque (113) comprend un des éléments suivants :
un élément de masquage attaché sur la surface de la première extrémité (110a) de l'ensemble fibre optique (110),
une couche de masquage déposée sur la surface de la première extrémité (110a) de l'ensemble fibre optique (110) .

7. Agencement de collecte de lumière (104a) selon la revendication 5, dans lequel l'ensemble fibre optique (110) comprend une première partie de recouvrement agencée pour recouvrir sa première extrémité (110a), dans lequel la première partie de recouvrement comprend une partie centrale opaque entourée par une partie transparente, la partie centrale opaque de la partie de recouvrement jouant ainsi le rôle du premier masque opaque (113).

8. Agencement de collecte de lumière selon l'une quelconque des revendications 1 à 7, dans lequel la fente (115) comprend une ouverture dans le deuxième masque opaque (114), dans lequel l'ouverture a une largeur sensiblement uniforme et elle s'étend sensiblement dans une direction latérale depuis un bord de l'âme de fibre (112) jusqu'à un bord opposé de l'âme de fibre (112).

9. Agencement de collecte de lumière (104a) selon l'une quelconque des revendications 1 à 8, dans lequel le deuxième masque opaque (114) comprend un des éléments suivants :
un élément de masquage attaché sur la surface de la deuxième extrémité (110b) de l'ensemble fibre optique (110),
une couche de masquage déposée sur la surface de la deuxième extrémité (110b) de l'ensemble fibre optique (110) .

10. Agencement de collecte de lumière (104a) selon l'une quelconque des revendications 1 à 8, dans lequel l'ensemble fibre optique (110) comprend une deuxième partie de recouvrement agencée pour recouvrir sa deuxième extrémité (110b), dans lequel la deuxième partie de recouvrement est agencée pour recouvrir l'âme de fibre (112) hormis ladite fente (115).

11. Agencement de collecte de lumière (104a) selon l'une quelconque des revendications 2 à 10, dans lequel des faces arrière respectives du premier masque opaque (113) et du deuxième masque opaque (114) qui sont tournées vers l'âme de fibre (112) comprennent des surfaces réfléchissantes respectives.

12. Instrument d'analyse (100) pour l'analyse de la composition élémentaire d'un échantillon (130) par spectroscopie d'émission optique, l'instrument d'analyse (100) comprenant :
un agencement de collecte de lumière (104a) selon l'une quelconque des revendications 1 à 11 disposé dans un espace à l'intérieur d'une partie d'un boîtier de l'instrument d'analyse (100) ; et
l'ensemble détecteur (106) agencé pour recevoir l'émission optique par le biais de l'interface de détecteur (106a) et générer un ou plusieurs signaux de mesures qui sont descriptifs de l'émission optique reçue.

13. Instrument d'analyse selon la revendication 12, comprenant en outre, disposé dans ledit espace, un dispositif d'excitation (102) pour générer une excitation dirigée vers la position cible (130a) pour induire l'émission optique depuis l'échantillon (130) positionné à la position cible (130a).

14. Instrument d'analyse (100) selon la revendication 13, dans lequel l'agencement de collecte de lumière (104a) et le dispositif d'excitation (102) sont disposés dans ledit espace de telle sorte que
la position cible (130a) est établie sensiblement à une surface de l'échantillon (130) quand ladite partie du boîtier est positionnée contre l'échantillon (130), et
ledit espace est pourvu d'une ouverture qui permet à l'excitation de sortir de l'espace vers la position cible (130a) et permet à l'émission optique provenant de la position cible (130a) d'entrer dans l'espace.
